# FASCICULE DE BREVET EUROPEEN

(11) **EP 1 853 440 B1**
(45) Date de publication et mention de la délivrance du brevet: **20.07.2016**
(21) Numéro de dépôt: 06724906.0
(22) Date de dépôt: 01.03.2006
(51) Int. Cl.: B60G 7/00, B60G 3/06

(54) **BRAS DE SUSPENSION ET PROCEDE POUR SA FABRICATION**
AUFHÄNGUNGSARM UND HERSTELLUNGSVERFAHREN DAFÜR
SUSPENSION ARM AND METHOD FOR MAKING SAME

(30) Priorité: 02.03.2005 FR 0502126
(43) Date de publication de la demande: 14.11.2007
(73) Titulaire: Auto Chassis International SNC, 72086 Le Mans Cédex 9 (FR)
(72) Inventeur: FERREIRA, Ricardo, F-72100 Le Mans (FR); THIREL, Jean-Marc, F-78700 Saint-Honorine (FR)
(74) Mandataire: Vidon Brevets & Stratégie
(86) Numéro de dépôt international: PCT/EP2006/060371
(87) Numéro de publication internationale: WO 2006/092418

(56) Documents cités:
- EP-A- 0 760 300
- EP-A- 1 223 058
- EP-A- 1 346 855

## Description

Le domaine de l'invention est celui des véhicules automobiles. Plus précisément, l'invention concerne les bras de suspension pour les véhicules automobiles.

On rappelle qu'un bras de suspension est un organe de châssis qui relie un support de roue (avant ou arrière) d'un véhicule à la caisse du véhicule ou à un berceau fixé à la caisse.

On connaît plusieurs techniques de bras de suspension, et notamment les bras de suspension de type boomerang (appelés ainsi pour leur similitude de forme avec un boomerang).

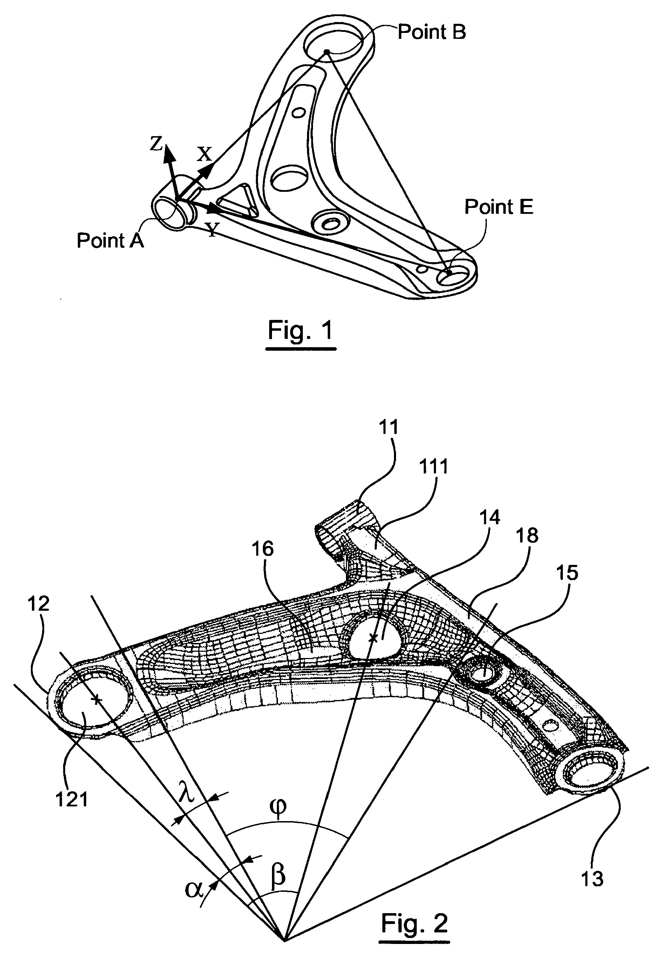

Un bras de suspension de ce type est illustré par la figure 1. Tel que cela apparaît, un tel bras peut être défini par trois points caractéristiques désignés par les lettres A, B, E.

Les points A (centre de l'articulation avant) et B (centre de l'articulation arrière) sont les points d'attache du bras sur le berceau du véhicule et E est le centre de la rotule qui lie le bras à la partie tournante du véhicule. Ces trois points forment le plan principal du bras, dans lequel transitent les efforts arrivant de la roue.

Un tel bras de suspension a un mouvement de rotation autour de l'axe X (AB) et suit les mouvements verticaux de la roue du choc au rebond.

Sur un plan théorique, un bras de suspension est formé d'une succession de sections unitaires, chacune pouvant être caractérisée par son centre de torsion. Tout chargement ponctuel en ce centre ne génèrera pas de torsion dans la section. On appelle alors « plan de torsion nulle » le plan dans lequel s'inscrivent les centres de torsion de chaque section.

Dans la pratique, il est très difficile d'obtenir un plan parfait. On essaie par conséquent de rapprocher au maximum tous les centres de torsion d'une surface la plus plane possible.

Aussi, lors de la conception d'un bras de suspension, on cherche à faire coïncider le plan de torsion nulle avec le plan d'effort du bras (plan dans lequel transitent les efforts entrant par le centre de la rotule). Ce plan d'effort correspond au plan de définition géométrique du bras défini par les trois points d'épure A, B et E définis précédemment. La superposition de ces deux plans confère au bras une stabilité optimum lorsque celui-ci est sollicité par des efforts entrant au point E.

Par ailleurs, les bras de suspensions monotôles boomerang avec douille soudée tels que proposés actuellement sont des bras de forme plane emboutis dans leur partie centrale, avec des bords tombés verticaux. Les emboutis des bras sont de faible profondeur et la zone du logement de la rotule peut être inclinée par rapport au plan principal du bras. Le bras peut également intégrer des fonctions supplémentaires, telles que notamment :
- permettre le passage d'une visseuse ;
- permettre la fixation d'une barre anti-dévers.

Les sections des emboutis ont des formes en U ouvertes plus ou moins refermées et de forme générale rectangulaire. Le plan de torsion nulle peut être décalé localement.

Une autre considération importante lors de la conception des bras de suspension concerne son encombrement et son débattement, notamment en fonction de la répartition spatiale des différents organes qui l'entourent.

On comprend que la conception d'un bras de suspension est donc notamment liée à l'architecture du véhicule. La définition du bras doit par conséquent à la fois satisfaire à un cahier des charges qui combine les performances du bras et les contraintes de proximité avec son environnement (pneumatique, barre anti-dévers, biellette de direction, berceau, passage de visseuse...).

En effet, les cahiers des charges confiés par les constructeurs de véhicules automobiles aux concepteurs de bras de suspension peuvent varier notablement. Ainsi, un grand nombre de paramètres liés au véhicule lui-même peuvent influer sur la conception des bras de suspension, tels que notamment :
- la largeur du véhicule ;
- la longueur du véhicule ;
- la répartition, sous la caisse du véhicule, des organes autres que le bras de suspension ;

Selon les paramètres définis par le constructeur, on comprend aisément que le concepteur de bras de suspensions dispose d'une marge de manoeuvre dimensionnelle plus ou moins importante en fonction du cahier des charges qui lui a été soumis.

En l'absence de contraintes spécifiques de la part du constructeur, une approche classique de bras de suspension consiste à prévoir une disposition de la biellette de direction qui n'interfère pas avec le débattement de la barre anti-dévers (couplée au bras de suspension) lors d'un rebond de la roue, en cas de choc encaissé par celle-ci.

Ainsi, l'architecture du véhicule est classiquement définie de façon à ce que la barre anti-dévers soit fixée au bras et se débatte à partir de celui-ci dans dans un espace au-dessus du plan de torsion nulle du bras lorsque la roue occupe une position de rebond.

Toutefois, l'architecture des véhicules évolue et les techniques actuelles de bras de suspension ne peuvent s'appliquer qu'à un nombre limité d'architectures véhicule.

Le document D1 - EP 1 223 058 décrit un bras inférieur pour automobile réalisé par emboutissage d'une plaque métallique qui comprend une première partie horizontale s'étendant horizontalement quand il est fixé au châssis du véhicule. Des parties perpendiculaires sont réalisées par pliage vers le bas des bords périphériques de la première partie horizontale, des rebords opposés sont réalisés par le pliage intérieur des bords inférieurs des parties perpendiculaires et une deuxième partie horizontale à proximité d'une douille de montage à pivotement sur le châssis du véhicule, cette partie s'étendant vers le haut à partir de la première horizontale. Le bras présente une cavité présentant une section courbe et formée dans une région centrale de la première partie horizontale.

L'invention a notamment pour objectif de pallier cet inconvénient de l'art antérieur.

Plus précisément, l'invention a pour objectif de proposer une technique de bras de suspension de conception nouvelle, et de permettre d'envisager de nouveaux types d'organisation des organes classiquement associés à un bras de suspension (barre anti-dévers, biellette de direction, ...).

L'invention a aussi pour objectif de fournir un tel bras de suspension qui soit simple de conception, facile à fabriquer, à monter et à mettre en oeuvre.

Ces objectifs, ainsi que d'autres qui apparaîtront par la suite, sont atteintes grâce à l'invention qui a pour objet un bras de suspension pour une roue d'un véhicule automobile, ledit bras étant défini notamment par un plan de torsion nulle et étant du type présentant une forme de boomerang dont l'une des extrémités est destinée à être couplée à une roue, l'autre extrémité et la partie médiane du bras étant destinées à être montées à pivotement sur un berceau solidaire du châssis dudit véhicule, ledit bras présentant également des moyens d'accouplement à au moins une barre anti-dévers présentant une partie coudée contournant une biellette de direction, ledit bras comprenant une cavité s'étendant à partir du voisinage de ladite extrémité montée à pivotement jusqu'au voisinage des moyens d'accouplement à ladite barre anti-dévers, ladite cavité étant prévue pour loger au moins partiellement ladite partie coudée sous ledit plan de torsion nulle lorsque ledit bras occupe une position rebond, et en ce qu'il comprend également des moyens de rigidification permettant de compenser une perte de rigidité induite par la présence de ladite cavité.

Ainsi, l'invention propose une conception nouvelle de bras de suspension qui permet d'envisager de nouveaux types d'organisation des organes classiquement associés à un bras de suspension.

En particulier, un tel bras de suspension permet d'envisager une architecture du véhicule selon laquelle la barre anti-dévers passe sous la biellette de direction, la conception du bras autorisant la barre de passer nettement sous le plan principal du bras lorsque la roue occupe une position de rebond, ceci sans entraîner de collision ou même de contact de la barre anti-dévers avec le bras de suspension.

Un tel bras présente donc une déformation par rapport à l'art antérieur, cette déformation formant une cavité qui augmente l'espace occupé classiquement par la barre anti-dévers à une zone qui s'étend en dessous du plan principal du bras.

En outre, malgré la présence d'une cavité relativement profonde telle qu'elle apparaîtra plus clairement dans la description qui va suivre, les caractéristiques mécaniques du bras sont maintenues, les moyens de rigidification assurant une tenue du bras satisfaisante.

Selon une solution avantageuse, ladite cavité présente au moins un orifice, lesdits moyens de rigidification comprenant un premier bord tombé entourant ledit orifice.

On comprend que la cavité réalisée pour le passage de la barre anti-dévers en position rebond de la roue a tendance en tant que telle à diminuer la rigidité du bras.

Aussi, l'orifice aux bords tombés contribue à compenser la diminution de rigidité, ceci d'autant plus qu'il est situé au sein même de la cavité responsable de cette diminution.

On note qu'un tel orifice pourra être dimensionné de façon à constituer avantageusement un passage de visseuse.

Préférentiellement, lesdits moyens de rigidification comprennent au moins un deuxième bord tombé de hauteur variable et formant au moins partiellement l'entourage dudit bras.

Un tel bord tombé formant au moins partie de l'entourage de bras contribue également à rigidifier celui-ci.

De plus, en faisant varier la hauteur du bord tombé, on peut prédéfinir la ou les zones dans lesquelles on souhaite obtenir la meilleure tenue mécanique, ceci bien entendu en fonction du niveau de contrainte s'exerçant dans les zones du bras en question.

Avantageusement, ladite cavité est bordée au moins partiellement par une surface plane s'étendant jusqu'au dit ou auxdits deuxième bord tombé et s'inscrivant dans un plan parallèle à un plan dit plan principal dudit bras.

Une telle surface plane s'étendant dans un plan unique contribue aussi à assurer une rigidité satisfaisante du bras de suspension.

Avantageusement, ladite extrémité destinée à être montée à pivotement sur ledit berceau présente un orifice d'accouplement s'inscrivant dans un plan formant un angle non nul avec ledit plan principal.

On favorise ainsi une répartition des contraintes s'exerçant sur le bras de nature à limiter la fatigue mécanique du bras, en particulier le flambement du bras en ruine longitudinale.

Préférentiellement, lesdits moyens d'accouplement de ladite barre anti-dévers comprennent un orifice ménagé dans une surface s'inscrivant dans un plan formant un angle non nul avec ledit plan principal.

Cette caractéristique contribue également à limiter la fatigue mécanique du bras, ceci en orientant et en répartissant de façon prédéterminée les efforts agissant sur le bras.

Selon une solution préférée, ladite cavité présente une section essentiellement circulaire qui décroît en allant vers les extrémités de ladite cavité.

De cette façon, le bras permet d'accueillir largement la partie coudée de la barre anti-dévers, ceci avec une déformation importante au voisinage de la partie coudée mais plus réduite aux extrémités de la cavité.

L'invention concerne également un procédé de fabrication d'un bras de suspension pour véhicule automobile, ledit bras étant défini notamment par un plan de torsion nulle et étant du type présentant une forme de boomerang dont l'une des extrémités est destinée à être couplée à une roue, l'autre extrémité et la partie médiane du bras étant destinées à être montées à pivotement sur un berceau solidaire du châssis dudit véhicule, ledit bras présentant également des moyens d'accouplement à au moins une barre anti-dévers présentant une partie coudée contournant une biellette de direction, le procédé comprenant une étape de réalisation d'une cavité s'étendant à partir du voisinage de ladite extrémité montée à pivotement jusqu'au voisinage des moyens d'accouplement à ladite barre anti-dévers, ladite cavité étant prévue pour loger au moins partiellement ladite partie coudée sous ledit plan de torsion nulle lorsque ledit bras occupe une position rebond, et en ce qu'il comprend également une étape de réalisation de moyens de rigidification permettant de compenser une perte de rigidité induite par la présence de ladite cavité, ladite étape de réalisation de ladite cavité et ladite étape de réalisation desdits moyens de rigidification étant obtenue au cours d'une étape d'emboutissage dudit bras de suspension.

Un tel procédé permet donc d'obtenir un bras de suspension d'un seul tenant (à l'exception de la douille solidarisée au bras par soudure) en un matériau tôle.

Ce procédé permet de réaliser le bras de suspension selon l'invention de façon relativement aisée et avec un prix de revient peu élevé.

L'invention concerne aussi une matrice d'emboutissage pour la mise en oeuvre d'un procédé de fabrication d'un bras de suspension pour véhicule automobile, ledit bras étant défini notamment par un plan de torsion nulle et étant du type présentant une forme de boomerang dont l'une des extrémités est destinée à être couplée à une roue, l'autre extrémité et la partie médiane du bras étant destinées à être montées à pivotement sur un berceau solidaire du châssis dudit véhicule, ledit bras présentant également des moyens d'accouplement à au moins une barre anti-dévers présentant ladite partie coudée contournant une biellette de direction, la matrice comprenant des moyens de formation dans ledit bras d'une cavité s'étendant à partir du voisinage de ladite extrémité montée à pivotement jusqu'au voisinage des moyens d'accouplement à ladite barre anti-dévers, ladite cavité étant prévue pour loger au moins partiellement ladite partie coudée sous ledit plan de torsion nulle lorsque ledit bras occupe une position rebond, et en ce qu'il comprend également des moyens de formation dans ledit bras de moyens de rigidification permettant de compenser une perte de rigidité induite par la présence de ladite cavité.

L'invention concerne encore un véhicule équipé d'au moins un bras de suspension pour véhicule automobile, ledit bras étant défini notamment par un plan de torsion nulle et étant du type présentant une forme de boomerang dont l'une des extrémités est destinée à être couplée à une roue, l'autre extrémité et la partie médiane du bras étant destinées à être montées à pivotement sur un berceau solidaire du châssis dudit véhicule, ledit bras présentant également des moyens d'accouplement à au moins une barre anti-dévers présentant une partie coudée contournant une biellette de direction, ledit bras de suspension comprenant une cavité s'étendant à partir du voisinage de ladite extrémité montée à pivotement jusqu'au voisinage des moyens d'accouplement à ladite barre anti-dévers, ladite cavité étant prévue pour loger au moins partiellement ladite partie coudée sous ledit plan de torsion nulle lorsque ledit bras occupe une position rebond, et en ce qu'il comprend également des moyens de rigidification permettant de compenser une perte de rigidité induite par la présence de ladite cavité.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue d'un bras de suspension selon l'art antérieur ;
- la figure 2 est une vue de dessus d'un bras de suspension selon l'invention ;
- la figure 3 est une vue en coupe transversale d'un bras de suspension selon l'invention, permettant d'illustrer la forme de la section de la cavité selon un mode de réalisation préférentiel ;
- la figure 4 est une autre vue en coupe transversale d'un bras de suspension selon l'invention, le plan de coupe passant par le passage de visseuse ;
- les figures 5 et 6 sont deux vues distinctes d'une douille montée sur un bras de suspension selon l'invention, selon un procédé de soudure particulier ;
- les figures 7 et 8 sont deux vues distinctes d'un bras de suspension selon l'invention, dans une position de rebond de la roue correspondante ;
- la figure 9 est une vue partielle en coupe longitudinale d'un bras de suspension selon l'invention ;
- les figures 10a et 10b sont des agrandissements partiels d'une zone de la figure 9 ;
- les figures 11 et 12 sont des vues d'une roue d'un véhicule équipé d'un bras de suspension selon l'invention, respectivement en situation de rebond et position stable.

En référence à la figure 2, un bras de suspension 1 de type boomerang est destiné à être fixé à un berceau solidaire du châssis d'un véhicule, ceci par l'intermédiaire d'une de ses extrémités 12 et d'une douille 11 soudée en partie médiane 111 du bras. La troisième extrémité 13 du bras de suspension est quant à elle destinée à être couplée à une roue par une liaison rotule.

En outre, un tel bras présente un trou 14 de passage pour une visseuse (en vue de permettre le vissage du berceau sur la caisse du véhicule) et un orifice 15 pour la fixation d'une barre anti-dévers.

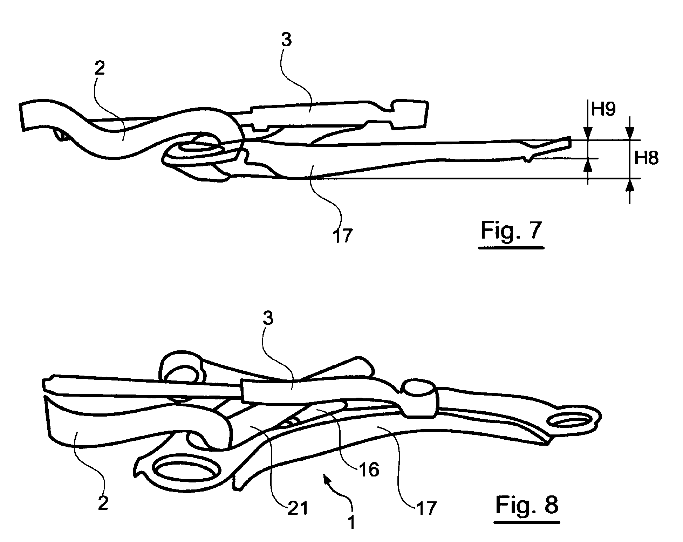

Selon le principe de l'invention, un tel bras comprend une cavité 16 qui s'étend à partir de l'extrémité du bras montée à pivotement sur le berceau jusqu'au voisinage de l'orifice 15 grâce auquel la barre anti-dévers est fixée au bras, cette cavité étant prévue pour loger, tel qu'illustré par les figures 7 et 8, la partie coudée 21 d'une barre anti-dévers 2 lorsque le bras 1 occupe une position rebond.

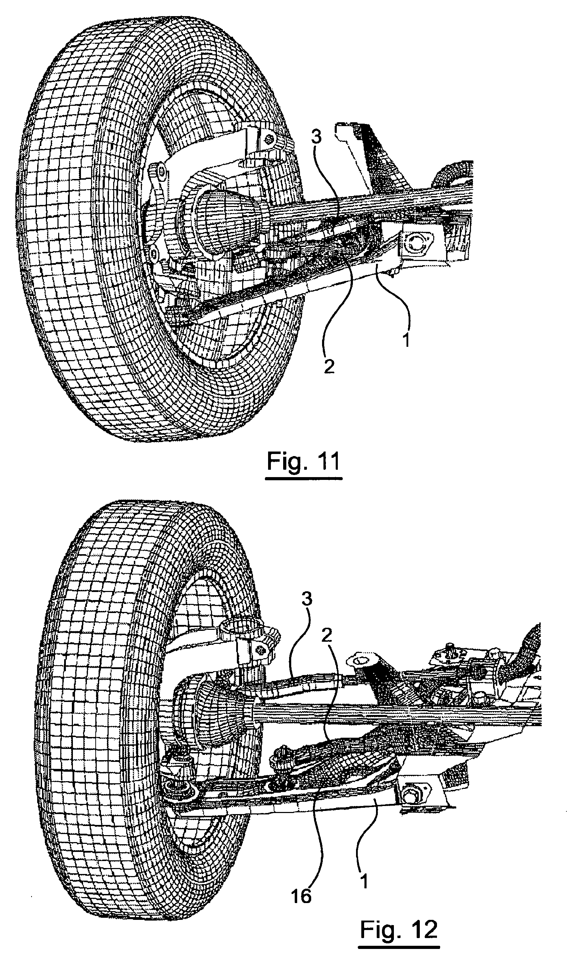

Tel que cela apparaît sur ces figures 7 et 8 et sur la figure 11, la partie coudée 21 d'une barre anti-dévers 2 placée entre le bras 1 et une biellette de direction 3 contourne cette dernière et vient, en position rebond du bras de suspension, se loger dans la cavité 16 du bras 1.

En revanche, en position stable de la roue (figure 12), la barre anti-dévers 2 et la biellette 3 sont écartées l'une de l'autre, et la barre anti-dévers est en dehors de la cavité 16 du bras de suspension (ou à tout le moins au-dessus du plan de torsion nulle de celui-ci).

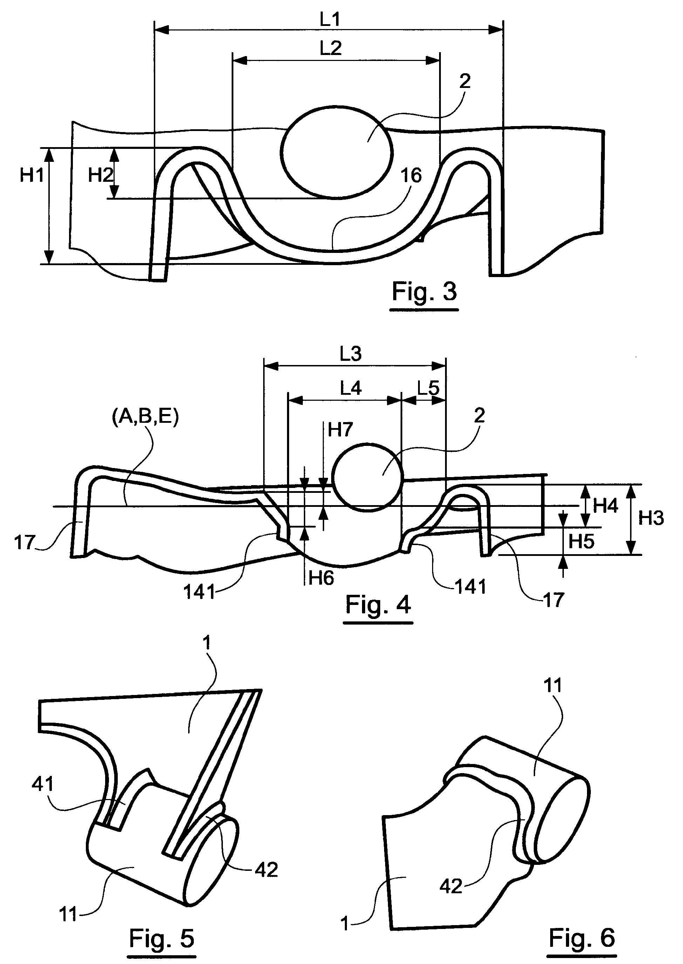

Selon le présent mode de réalisation, la cavité 16 du bras présente une section circulaire illustrée par la figure 3, cette section étant décroissante en allant vers chacune des extrémités de la cavité.

De plus, le bras comprend des moyens de rigidification permettant de compenser une perte de rigidité induite par la présence de la cavité.

Ces moyens de rigidification sont notamment formés par un bord tombé 141 (apparaissant sur la figure 4) s'étendant à partir de l'orifice 14 permettant le passage d'une visseuse.

En outre, un bord tombé 17 formant partiellement l'entourage du bras de suspension et présentant une hauteur variable (figures 7 et 8) contribue à rigidifier le bras de suspension.

A titre indicatif, le bord tombé 17 présente selon le présent mode de réalisation des variations de hauteur telles que H8 ≥ 1,6.H9 (figure 7).

Par ailleurs, la bonne tenue mécanique du bras de suspension est assurée également par une surface plane 18 bordant la cavité 16, en s'étendant des bords de la cavité jusqu'aux bords tombés 17 formant partie de l'entourage du bras.

On note que le plan (A, B, E) tel que défini précédemment en référence à l'art antérieur correspond sensiblement au plan de torsion nulle du bras de suspension et que, selon l'invention la cavité 16 est suffisamment profonde pour permettre à la partie coudée 21 de la barre anti-dévers de passer partiellement sous le plan de torsion nulle du bras de suspension.

Selon une autre caractéristique, l'extrémité 12 du bras présente un orifice 121 ménagé dans une surface formant un angle non nul avec le plan principal (A, B, E) du bras.

A titre indicatif, le plan de l'orifice 121 forme des angles respectivement de 4,9° par rapport au plan (X, Y), selon une rotation autour de l'axe Y et de 2,7° par rapport au plan (X, Y), selon une rotation autour de l'axe X.

Selon encore une autre caractéristique, l'orifice permettant l'accouplement de la barre anti-dévers au bras est ménagé dans une surface formant un angle non nul avec le plan (A, B, E) du bras.

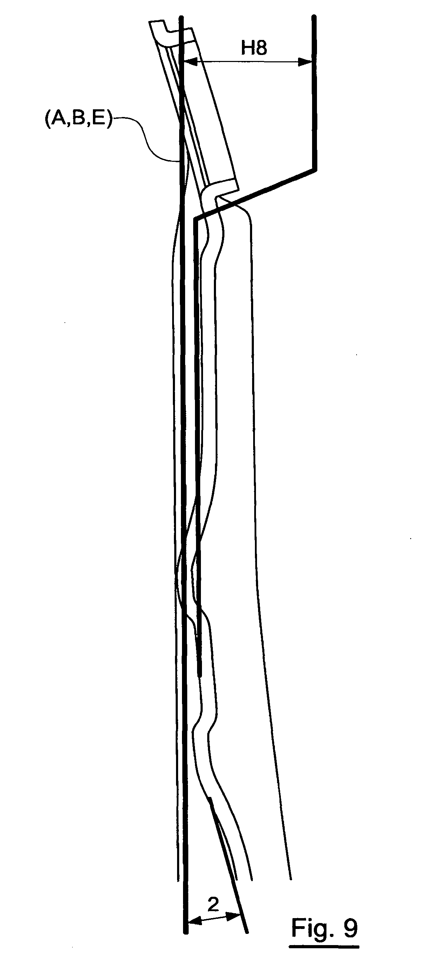

Tel qu'illustré par la figure 9, cet angle γ1 est supérieur ou égal à 4,5°.

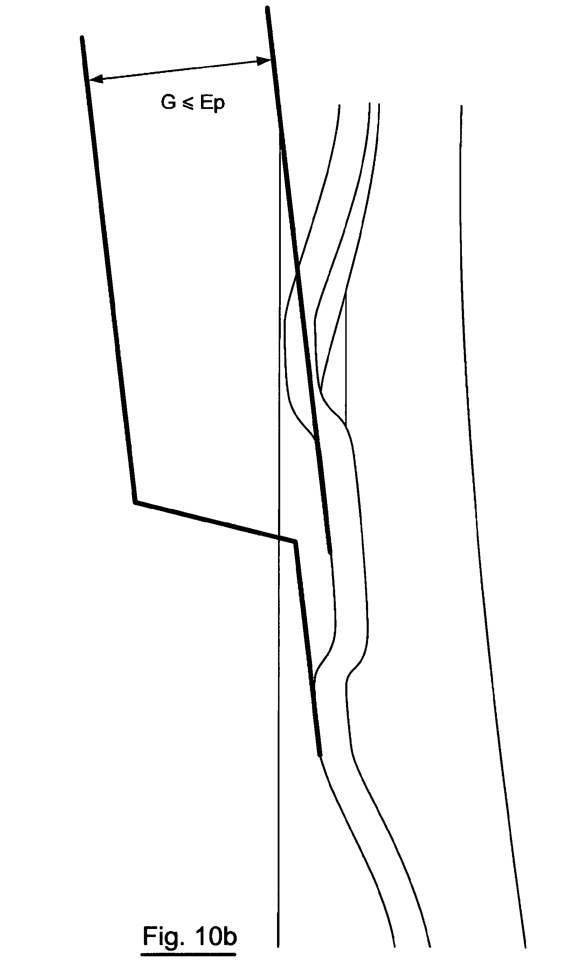

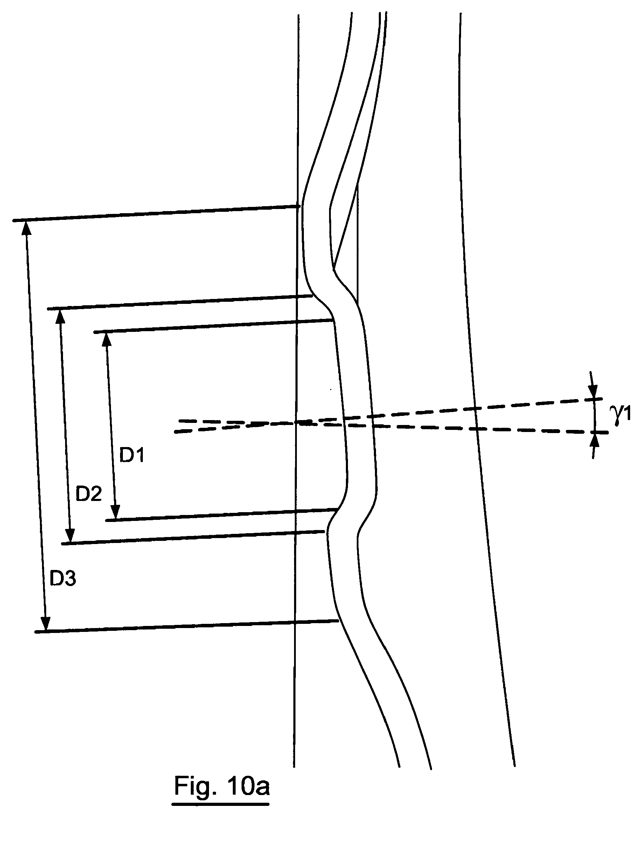

Par ailleurs, toujours à titre indicatif, un bras de suspension selon l'invention présente les dimensions et/ou rapport de dimensions suivants :
- α = 21,2° , β = 42,4°, ϕ ≥ 56° , λ = 34° (figure 2) ;
- H2 ≥ 0,6.H1 (figure 3) ;
- L2 ≥ 0,6.L1 (figure 3) ;
- L4 ≥ 0,7.L3, L5 ≥ 0,2.L3 (figure 4) ;
- H4 ≥ 0,6.H3, H5 ≥ 0,2.H3, H6 ≥ 0,35.H3, H7 ≥ 0,17.H3 (figure 4) ;
- D2 = 1,3.D1, D3 = 1,8.D1 , γl ≥ 4,5° et γ2 ≥ 20° ; H8 ≥ 3 mm (figures 9 et 10a) ;
- G ≤ Ep, Ep étant l'épaisseur de la tôle (figure 10b).

On note que les traits de rappel permettant d'indiquer certaines dimensions s'étendant à partir de points correspondant à des changements de rayon de courbure. Ceci est le cas par exemple pour les traits de rappel des dimensions L2, L3, L4 et L5 sur les figures 3 et 4.

En référence aux figures 5 et 6 une douille 11 est soudée au bras de suspension 1 par trois cordons de soudure :
- un cordon 41, entre les zones d'accostage du bras 1 ;
- un cordon 42, côté extérieur par rapport à l'espace entre les zones d'accostage du bras ;
- un cordon 43, supérieur.

Ainsi disposés, les cordons 41, 42, 43 peuvent être réalisés par un robot de soudure, avec la même prise de pièce pour la réalisation des trois cordons. En d'autres termes, la réalisation de ces trois cordons ainsi disposés évite le changement de prise classique lorsque les cordons latéraux sont tous deux disposés à l'extérieur de l'espace entre les zones d'accostage.

Selon un mode de réalisation préféré, le bras de suspension qui vient d'être décrit est réalisé par emboutissage d'une tôle, à l'aide d'une matrice d'emboutissage prévue selon l'invention.

## Revendications

1. Bras de suspension pour une roue d'un véhicule automobile, ledit bras étant défini notamment par un plan de torsion nulle et étant du type présentant une forme de boomerang dont l'une des extrémités (13) est destinée à être couplée à une roue, l'autre extrémité (12) et la partie médiane (111) du bras étant destinées à être montées à pivotement sur un berceau solidaire du châssis dudit véhicule, ledit bras présentant également des moyens d'accouplement (15) à au moins une barre anti-dévers (2) présentant une partie coudée (21) contournant une biellette de direction (3),
**caractérisé en ce qu'**il comprend une cavité (16) s'étendant à partir du voisinage de ladite extrémité (12) montée à pivotement, jusqu'au voisinage des moyens d'accouplement (15) à ladite barre anti-dévers (2) situés sur l'autre extrémité (13), ladite cavité (16) étant prévue pour loger au moins partiellement ladite partie coudée (21) sous ledit plan de torsion nulle lorsque ledit bras occupe une position rebond, et **en ce qu'**il comprend également des moyens de rigidification permettant de compenser une perte de rigidité induite par la présence de ladite cavité (16), ladite cavité (16) présentant une section essentiellement circulaire qui décroît en allant vers les extrémités de ladite cavité.

2. Bras de suspension selon la revendication 1, **caractérisé en ce que** ladite cavité (16) présente au moins un orifice (14), lesdits moyens de rigidification comprenant un premier bord tombé (141) entourant ledit orifice (14).

3. Bras de suspension selon l'une des revendications 1 et 2, **caractérisé en ce que** lesdits moyens de rigidification comprennent au moins un deuxième bord tombé (17) de hauteur variable et formant au moins partiellement l'entourage dudit bras.

4. Bras de suspension selon la revendication 3, **caractérisé en ce que** ladite cavité (16) est bordée au moins partiellement par une surface plane (18) s'étendant jusqu'au dit ou auxdits deuxième bord tombé (17) et s'inscrivant dans un plan parallèle à un plan dit plan principal (A, B, E) dudit bras.

5. Bras de suspension selon la revendication 4, **caractérisé en ce que** ladite extrémité (12) destinée à être montée à pivotement sur ledit berceau présente un orifice d'accouplement (121) s'inscrivant dans un plan formant un angle non nul avec ledit plan principal (A, B, E).

6. Bras de suspension selon l'une des revendications 4 et 5, **caractérisé en ce que** lesdits moyens d'accouplement (15) de ladite barre anti-dévers comprennent un orifice ménagé dans une surface s'inscrivant dans un plan formant un angle non nul avec ledit plan principal (A, B, E).

7. Procédé de fabrication d'un bras de suspension pour véhicule automobile selon la revendication 1, ledit bras étant défini notamment par un plan de torsion nulle et étant du type présentant une forme de boomerang dont l'une des extrémités (13) est destinée à être couplée à une roue, l'autre extrémité (12) et la partie médiane (111) du bras étant destinées à être montées à pivotement sur un berceau solidaire du châssis dudit véhicule, ledit bras présentant également des moyens d'accouplement (15) à au moins une barre anti-dévers (2) présentant une partie coudée (21) contournant une biellette de direction (3),
**caractérisé en ce qu'**il comprend une étape de réalisation d'une cavité (16) s'étendant à partir du voisinage de ladite extrémité (12) montée à pivotement jusqu'au voisinage des moyens d'accouplement (15) à ladite barre anti-dévers (2) situés sur l'autre extrémité (13), ladite cavité étant prévue pour loger au moins partiellement ladite partie coudée (21) sous ledit plan de torsion nulle lorsque ledit bras occupe une position rebond, et **en ce qu'**il comprend également une étape de réalisation de moyens de rigidification permettant de compenser une perte de rigidité induite par ladite présence de la cavité, ladite étape de réalisation de ladite cavité (16) et ladite étape de réalisation desdits moyens de rigidification étant obtenue au cours d'une étape d'emboutissage dudit bras de suspension, ladite cavité (16) présentant une section essentiellement circulaire qui décroît en allant vers les extrémités de ladite cavité.

8. Matrice d'emboutissage pour la mise en oeuvre d'un procédé de fabrication d'un bras de suspension pour véhicule automobile selon la revendication 7, ledit bras étant défini notamment par un plan de torsion nulle et étant du type présentant une forme de boomerang dont l'une des extrémités (13) est destinée à être couplée à une roue, l'autre extrémité (12) et la partie médiane (111) du bras étant destinées à être montées à pivotement sur un berceau solidaire du châssis dudit véhicule, ledit bras présentant également des moyens d'accouplement (15) à au moins une barre anti-dévers (2) présentant une partie coudée (21) contournant une biellette de direction (3),
**caractérisé en ce qu'**elle comprend des moyens de formation dans ledit bras d'une cavité (16) s'étendant à partir du voisinage de ladite extrémité (12) montée à pivotement jusqu'au voisinage des moyens d'accouplement (15) à ladite barre anti-dévers (2) situés sur l'autre extrémité (13), ladite cavité (16) étant prévue pour loger au moins partiellement ladite partie coudée (21) sous ledit plan de torsion nulle lorsque ledit bras occupe une position rebond, et **en ce qu'**il comprend également des moyens de formation dans ledit bras de moyens de rigidification permettant de compenser une perte de rigidité induite par la présence de ladite cavité (16), ladite cavité (16) présentant une section essentiellement circulaire qui décroît en allant vers les extrémités de ladite cavité.

9. Véhicule équipé d'au moins un bras de suspension pour véhicule automobile selon la revendication 1, ledit bras étant défini notamment par un plan de torsion nulle et étant du type présentant une forme de boomerang dont l'une des extrémités (13) est destinée à être couplée à une roue, l'autre extrémité (12) et la partie médiane (111) du bras étant destinées à être montées à pivotement sur un berceau solidaire du châssis dudit véhicule, ledit bras présentant également des moyens d'accouplement (15) à au moins une barre anti-dévers (2) présentant une partie coudée (21) contournant une biellette de direction,
**caractérisé en ce que** ledit bras de suspension comprend une cavité (16) s'étendant à partir du voisinage de ladite extrémité (12) montée à pivotement jusqu'au voisinage des moyens d'accouplement (15) à ladite barre anti-dévers (2) situés sur l'autre extrémité (13), ladite cavité (16) étant prévue pour loger au moins partiellement ladite partie coudée (21) sous ledit plan de torsion nulle lorsque ledit bras occupe une position rebond, et **en ce qu'**il comprend également des moyens de rigidification permettant de compenser une perte de rigidité induite par la présence de ladite cavité (16), ladite cavité (16) présentant une section essentiellement circulaire qui décroît en allant vers les extrémités de ladite cavité.

## Patentansprüche

1. Querlenker für ein Rad eines Kraftfahrzeugs, wobei der Querlenker insbesondere durch eine Schubmittelpunktsebene definiert und bumerangförmig ist, dessen eines Ende (13) dazu bestimmt ist, mit einem Rad gekoppelt zu werden, wobei das andere Ende (12) und der Mittenteil (111) des Querlenkers dazu bestimmt sind, schwenkend auf einer Aufhängung montiert zu werden, die fest mit dem Chassis des Fahrzeugs verbunden ist, wobei der Querlenker auch Kopplungsmittel (15) an mindestens einer Querstabilisierungsstange (2) aufweist, die einen abgewinkelten, um eine Lenkschubstange (3) herumgeführten Abschnitt (21) aufweist,
**dadurch gekennzeichnet, dass** er einen Hohlraum (16) umfasst, der sich ausgehend von der Nachbarschaft des schwenkend montierten Endes (12), , bis in die Nachbarschaft der Mittel (15) zum Koppeln mit der Querstabilisierungsstange (2), die auf dem anderen Ende (13) liegen, erstreckt, wobei der Hohlraum (16) dazu vorgesehen ist, mindestens teilweise den abgewinkelten Abschnitt (21) unter der Schubmittelpunktsebene aufzunehmen, wenn der Querlenker eine Rückfederungsposition einnimmt, und dass er gleichermaßen Versteifungsmittel umfasst, die es erlauben, einen Steifigkeitsverlust, der durch die Gegenwart des Hohlraums (16) eingeführt wird, zu kompensieren, wobei der Hohlraum (16) einen im Wesentlichen kreisförmigen Querschnitt aufweist, der sich in Richtung der Enden des Hohlraums verkleinert.

2. Querlenker nach Anspruch 1, **dadurch gekennzeichnet, dass** der Hohlraum (16) mindestens eine Öffnung (14) aufweist, wobei die Versteifungsmittel einen ersten Flanschring (141) umfassen, der die Öffnung (14) umgibt.

3. Querlenker nach einem der Ansprüche 1 und 2, **dadurch gekennzeichnet, dass** die Versteifungsmittel mindestens einen zweiten Flanschring (17) mit variabler Höhe aufweisen, der mindestens teilweise die Umfassung des Querlenkers bildet.

4. Querlenker nach Anspruch 3, **dadurch gekennzeichnet, dass** der Hohlraum (16) mindestens teilweise von einer flachen Oberfläche (18) umfasst ist, die sich bis zu dem oder den zweiten Flanschringen (17) erstreckt und in einer Ebene parallel zu einer sogenannten Hauptebene (A, B, E) des Querlenkers liegt.

5. Querlenker nach Anspruch 4, **dadurch gekennzeichnet, dass** das Ende (12), das dazu bestimmt ist, schwenkend auf der Aufhängung montiert zu werden, die eine Kopplungsöffnung (121) aufweist, die in eine Ebene fällt, die einen von null verschiedenen Winkel mit der Hauptebene (A, B, E) bildet.

6. Querlenker nach einem der Ansprüche 4 und 5, **dadurch gekennzeichnet, dass** die Mittel (15) zum Koppeln mit der Querstabilisierungsstange eine Öffnung umfassen, die in einer Oberfläche eingerichtet ist, die in eine Ebene fällt, die einen von null verschiedenen Winkel mit der Hauptebene (A, B, E) bildet.

7. Verfahren zum Herstellen eines Querlenkers für Kraftfahrzeuge nach Anspruch 1, wobei der Querlenker insbesondere durch eine Schubmittelpunktsebene definiert und bumerangförmig ist, dessen eines Ende (13) dazu bestimmt ist, mit einem Rad gekoppelt zu werden, wobei das andere Ende (12) und der Mittenteil (111) des Querlenkers dazu bestimmt sind, schwenkend an einer Aufhängung montiert zu sein, die fest mit dem Chassis des Fahrzeugs verbunden ist, wobei der Querlenker auch Mittel (15) zum Koppeln mit mindestens einer Querstabilisierungsstange (2) aufweist, die einen um eine Lenkstange (3) herumgeführten abgewinkelten Abschnitt (21) aufweist, ,
**dadurch gekennzeichnet, dass** es einen Schritt des Herstellens eines Hohlraums (16) umfasst, der sich von der Nachbarschaft des schwenkend montierten Endes (12), bis in die Nähe der Mittel (15) zum Koppeln mit der Querstabilisierungsstange (2), die auf dem anderen Ende (13) liegen, erstreckt, wobei der Hohlraum vorgesehen ist, um den abgewinkelten Abschnitt (21) mindestens teilweise unter der Schubmittelpunktsebene aufzunehmen, wenn der Querlenker eine Rückfederungsposition einnimmt, und dass es auch einen Schritt des Herstellens von Versteifungsmitteln umfasst, die es erlauben, einen Steifigkeitsverlust, der durch die Gegenwart des Hohlraums eingeführt wird, zu kompensieren, wobei die Herstellung des Hohlraums (16) und die Herstellung der Versteifungsmittel im Laufe eines Tiefziehschritts des Querlenkers erhalten werden, wobei der Hohlraum (16) einen im Wesentlichen kreisförmigen Querschnitt aufweist, der sich in Richtung der Enden des Hohlraums verkleinert.

8. Tiefziehform zum Umsetzen eines Herstellungsverfahrens eines Querlenkers für Kraftfahrzeug nach Anspruch 7, wobei der Querlenker insbesondere durch eine Schubmittelpunktsebene definiert und bumerangförmig ist, dessen eines Ende (13) dazu bestimmt ist, mit einem Rad gekoppelt zu werden, wobei das andere Ende (12) und der Mittenteil (111) des Querlenkers dazu bestimmt sind, schwenkend auf einer Aufhängung, die fest mit dem Chassis des Fahrzeugs verbunden ist, montiert zu werden, wobei der Querlenker auch Mittel (15) zum Koppeln mit mindestens einer Querstabilisierungsstange (2) aufweist, die einen um eine Lenkschubstange (3) herumgeführten abgewinkelten Abschnitt (21) aufweist,
**dadurch gekennzeichnet, dass** sie Mittel zum Ausbilden eines Hohlraums (16) in dem Querlenker umfasst, der sich ausgehend von der Nachbarschaft des schwenkend montierten Endes (12), bis in die Nachbarschaft der Mittel (15) zum Koppeln mit der Querstabilisierungsstange (2), die auf dem anderen Ende (13) liegen, erstreckt, wobei der Hohlraum (16) dazu vorgesehen ist, mindestens teilweise den abgewinkelten Abschnitt (21) unter der Schubmittelpunktsebene aufzunehmen, wenn der Querlenker eine Rückfederungsposition einnimmt, und dass sie auch Mittel zum Bilden von Versteifungsmitteln in dem Querlenker umfasst, die es erlauben, einen Steifigkeitsverlust, der durch die Gegenwart des Hohlraums (16) eingeführt wird, zu kompensieren, wobei der Hohlraum (16) einen im Wesentlichen kreisförmigen Querschnitt aufweist, der sich in Richtung der Enden des Hohlraums verkleinert.

9. Fahrzeug, das mit mindestens einem Querlenker für Kraftfahrzeug nach Anspruch 1 ausgestattet ist, wobei der Querlenker insbesondere durch eine Schubmittelpunktsebene definiert und bumerangförmig ist, dessen eines Ende (13) dazu bestimmt ist, mit einem Rad gekoppelt zu werden, wobei das andere Ende (12) und der Mittenteil (111) des Querlenkers dazu bestimmt sind, schwenkend auf einer Aufhängung, die fest mit dem Chassis des Fahrzeugs verbunden ist, montiert zu werden, wobei der Querlenker auch Mittel (15) zum Koppeln mit mindestens einer Querstabilisierungsstange (2) aufweist, die einen um eine Lenkschubstange herumgeführten abgewinkelten Abschnitt (21) aufweist,
**dadurch gekennzeichnet, dass** der Querlenker einen Hohlraum (16) umfasst, der sich ausgehend von der Nachbarschaft des schwenkend montierten Endes (12), , bis in die Nachbarschaft der Mittel (15) zur Kopplung mit der Querstabilisierungsstange (2), die auf dem anderen Ende (13) liegen, erstreckt, wobei der Hohlraum (16) vorgesehen ist, um mindestens teilweise den abgewinkelten Abschnitt (21) unter der Schubmittelpunktsebene aufzunehmen, wenn der Querlenker eine Rückfederungsposition einnimmt, und dass es auch Versteifungsmittel umfasst, die es erlauben, einen Steifigkeitsverlust, der durch die Gegenwart des Hohlraums (16) eingeführt wird, zu kompensieren, wobei der Hohlraum (16) einen im Wesentlichen kreisförmigen Querschnitt aufweist, der sich in Richtung der Enden des Hohlraums verkleinert.

## Claims

1. Suspension arm for a wheel of a motor vehicle, said arm being defined in particular by a zero-torsion plane and being of the type having the shape of a boomerang, one of the ends (13) of which is intended to be coupled to a wheel, the other end (12) and the median part (111) of the arm being intended to be pivotably mounted on a cradle integral with the chassis of said vehicle, said arm also having means for coupling (15) to at least one anti-roll bar (2) having a bent part (21) bypassing a tie rod (3),
**characterised in that** it comprises a cavity (16) extending from the vicinity of said pivotably mounted end (12) as far as the vicinity of the means for coupling (15) to said anti-roll bar (2) which are situated on the other end (13), said cavity (16) being provided for at least partially receiving said bent part (21) beneath said zero-torsion plane when said arm occupies a rebound position, and **in that** it also comprises rigidifying means enabling compensation for a loss of rigidity induced by the presence of said cavity (16), said cavity (16) having a substantially circular cross-section which decreases going towards the ends of said cavity.

2. Suspension arm according to Claim 1, **characterised in that** said cavity (16) has at least one orifice (14), said rigidifying means comprising a first flanged edge (141) surrounding said orifice (14).

3. Suspension arm according to one of Claims 1 and 2, **characterised in that** said rigidifying means comprise at least one second flanged edge (17) of variable height and forming at least partially the surround of said arm.

4. Suspension arm according to Claim 3, **characterised in that** said cavity (16) is bordered at least partially by a plane surface (18) extending as far as said second flanged edge or second flanged edges (17) and being inscribed in a plane parallel to a plane called the main plane (A, B, E) of said arm.

5. Suspension arm according to Claim 4, **characterised in that** said end (12) intended to be pivotably mounted on said cradle has a coupling orifice (121) inscribed in a plane forming a non-zero angle with said main plane (A, B, E).

6. Suspension arm according to one of Claims 4 and 5, **characterised in that** said means of coupling (15) of said anti-roll bar comprise an orifice provided in a surface inscribed in a plane forming a non-zero angle with said main plane (A, B, E).

7. Method for manufacturing a suspension arm for a motor vehicle according to Claim 1, said arm being defined in particular by a zero-torsion plane and being of the type having the shape of a boomerang, one of the ends (13) of which is intended to be coupled to a wheel, the other end (12) and the median part (111) of the arm being intended to be pivotably mounted on a cradle integral with the chassis of said vehicle, said arm also having means for coupling (15) to at least one anti-roll bar (2) having a bent part (21) bypassing a tie rod (3),
**characterised in that** it comprises a step of producing a cavity (16) extending from the vicinity of said pivotably mounted end (12) as far as the vicinity of the means for coupling (15) to said anti-roll bar (2) which are situated on the other end (13), said cavity being provided for at least partially receiving said bent part (21) beneath said zero-torsion plane when said arm occupies a rebound position, and **in that** it also comprises a step of producing rigidifying means enabling compensation for a loss of rigidity induced by the presence of the cavity, said step of producing said cavity (16) and said step of producing said rigidifying means being obtained during a step of stamping said suspension arm, said cavity (16) having a substantially circular cross-section which decreases going towards the ends of said cavity.

8. Stamping die for the implementation of a method for manufacturing a suspension arm for a motor vehicle according to Claim 7, said arm being defined in particular by a zero-torsion plane and being of the type having the shape of a boomerang, one of the ends (13) of which is intended to be coupled to a wheel, the other end (12) and the median part (111) of the arm being intended to be pivotably mounted on a cradle integral with the chassis of said vehicle, said arm also having means for coupling (15) to at least one anti-roll bar (2) having a bent part (21) bypassing a tie rod (3),
**characterised in that** it comprises means for forming in said arm a cavity (16) extending from the vicinity of said pivotably mounted end (12) as far as the vicinity of the means for coupling (15) to said anti-roll bar (2) which are situated on the other end (13), said cavity (16) being provided for at least partially receiving said bent part (21) beneath said zero-torsion plane when said arm occupies a rebound position, and **in that** it also comprises means for forming in said arm, rigidifying means enabling compensation for a loss of rigidity induced by the presence of said cavity (16), said cavity (16) having a substantially circular cross-section which decreases going towards the ends of said cavity.

9. Vehicle equipped with at least one suspension arm for a motor vehicle according to Claim 1, said arm being defined in particular by a zero-torsion plane and being of the type having the shape of a boomerang, one of the ends (13) of which is intended to be coupled to a wheel, the other end (12) and the median part (111) of the arm being intended to be pivotably mounted on a cradle integral with the chassis of said vehicle, said arm also having means for coupling (15) to at least one anti-roll bar (2) having a bent part (21) bypassing a tie rod,
**characterised in that** said suspension arm comprises a cavity (16) extending from the vicinity of said pivotably mounted end (12) as far as the vicinity of the means for coupling (15) to said anti-roll bar (2) which are situated on the other end (13), said cavity (16) being provided for at least partially receiving said bent part (21) beneath said zero-torsion plane when said arm occupies a rebound position, and **in that** it also comprises rigidifying means enabling compensation for a loss of rigidity induced by the presence of said cavity (16), said cavity (16) having a substantially circular cross-section which decreases going towards the ends of said cavity.
